# EUROPÄISCHE PATENTSCHRIFT

(11) **EP 3 384 581 B1**
(45) Veröffentlichungstag und Bekanntmachung des Hinweises auf die Patenterteilung: **11.05.2022**
(21) Anmeldenummer: 16797556.4
(22) Anmeldetag: 17.11.2016
(51) Int. Cl.: H02K 9/19

(54) **GEBAUTE ROTORHOHLWELLE MIT KÜHLMEDIUMVERTEILELEMENT**
ASSEMBLED HOLLOW ROTOR SHAFT HAVING A COOLING-MEDIUM DISTRIBUTION ELEMENT
ARBRE CREUX DE ROTOR ASSEMBLÉ À ÉLÉMENT DE DISTRIBUTION DE FLUIDE DE REFROIDISSEMENT

(30) Priorität: 30.11.2015 DE 102015223631
(43) Veröffentlichungstag der Anmeldung: 10.10.2018
(73) Patentinhaber: thyssenkrupp AG, 45143 Essen (DE); ThyssenKrupp Presta TecCenter AG, 9492 Eschen (LI)
(72) Erfinder: PAUL, Daniel, 09235 Burkhardtsdorf (DE); KÖTSCHAU, Christian, 09112 Chemnitz (DE); WAPPLER, Sebastian, 09224 Chemnitz (DE)
(74) Vertreter: thyssenkrupp Intellectual Property GmbH
(86) Internationale Anmeldenummer: PCT/EP2016/077925
(87) Internationale Veröffentlichungsnummer: WO 2017/093026

(56) Entgegenhaltungen:
- EP-A2- 1 892 512
- DE-A1- 2 900 133
- US-A1- 2012 299 404

## Beschreibung

Die Erfindung betrifft eine gebaute Rotorhohlwelle für einen sich um eine Längsachse rotierenden Rotor einer elektrischen Maschine, aufweisend einen Zylindermantel, welcher einen Wellenhohlraum umgibt, sowie beidseitig an dem Zylindermantel angeordnete Stirnflansche, wobei sich an den Stirnflanschen jeweils ein Wellenzapfen befindet und wobei in einem der Stirnflansche, insbesondere in dessen Wellenzapfen, ein Einlass vorgesehen ist, über welchen ein Kühlmedium in den Wellenhohlraum und an eine Innenfläche des Zylindermantels leitbar ist.

Grundlegend sind gebaute Rotoren für elektrische Maschinen mit darauf angeordneten Blechen, welche beispielsweise zu Blechpaketen zusammengefasst sind, bekannt. Diese Rotoren finden zum Beispiel Einsatz in Asynchronmaschinen oder in permanent erregten Synchronmaschinen. Elektrische Maschinen werden bekannter Weise im Betrieb wegen der elektromagnetischen Aktivität im Rotor sowie auch aufgrund des stattfindenden Wärmeübergangs auf andere gewichtsoptimierte Trägerbauteile stark erwärmt. Eine Erwärmung der elektrischen Maschine führt nachteilig zu einer Reduzierung deren Wirkungsgrades. Um die Leistung einer elektrischen Maschine zu steigern und insbesondere deren Wirkungsgrad zu optimieren, werden bekannter Weise Kühlsysteme integriert. Grundlegend sind unterschiedliche Konzepte von Kühlsystemen, insbesondere zur Flüssigkeitskühlung, bekannt. Dabei gehen die benannten Flüssigkeitskühlungen mit einem spezifischen Rotordesign einher, das sich beispielsweise spezieller Kühlmittelleitstrukturen bedient. Auch andere Konzepte bedürfen einer Vielzahl an Zusatzkomponenten, die nicht nur das Design des Rotors, sondern auch das der gesamten elektrischen Maschine und deren Schnittstellenkomponenten beeinflussen.

Des Weiteren sind ebenso verschiedene Lösungen zur Leitung und Verteilung des Kühlmediums hin zur Wärmeübertragungsfläche als grundlegend bekannt anzusehen, wobei diese nachteilig eine vollständige, über die gesamte axiale und radiale Wegstrecke als Zwangsführung ausgelegte Leitung des Kühlmittels in Kanälen oder Bohrungen aufweisen können. Derartige Zwangsführungen bedingen durch den Strömungswiderstand einen hohen Druckverlust, so dass Kühlmittelpumpen notwendig werden, insbesondere wenn eine Flussrichtung entgegen der Zentrifugalkraft enthalten ist. Zudem ist die Umsetzung dieser Konzepte wegen der Vielzahl an Bohrungen, insbesondere Axiallochbohren, besonders aufwendig. Beispielsweise ist aus CH 337267 eine elektrische Maschine mit einer Hohlwelle bekannt, bei welcher der gesamte Hohlraum des Rotors mit einer Flüssigkeit gefüllt werden muss, um eine ausreichende Interaktion der Kühlflüssigkeit mit dem Rotormantel und einen guten Wärmeübergang zu erreichen. Es hat sich allerdings herausgestellt, dass sich auf diese Weise keine ausreichende Wärmemenge abführen lässt. Auch in US 3 809 933 A ist eine gekühlte elektrische Maschine beschrieben. Hierbei wird ein Kühlmedium über ein Rohr in das Innere einer Rotorhohlwelle geleitet und über einen Trichter auf die Innenfläche des Zylindermantels der Rotorhohlwelle abgegeben. Der mit der Rotorhohlwelle mitrotierende Trichter ist einseitig befestigt und erstreckt sich lediglich bis zur Hälfte der Rotorhohlwelle in Längsachsenrichtung. Für das in den Rotorhohlwellenhohlraum eingebrachte Kühlmedium stehen folglich unterschiedliche miteinander verbundene große Volumina zur Verfügung. Hierbei erfolgt eine axiale Ausgleichsströmung, welcher der tangentialen Gasströmung derart überlagert ist, dass das Kühlmedium im wandnahen Bereich mitgerissen wird. Folglich wird eine Ungleichverteilung des Kühlmediums zugunsten derjenigen Hälfte der Rotorwelle bewirkt, in welcher der Trichter angeordnet bzw. ausgebildet ist.

Zur Reduzierung des Volumenbedarfs ist es grundlegend bekannt zu geringe Querschnitte der für das Kühlmittel vorgesehenen Leitungen zu wählen. Allerdings reduzieren derart kleine Durchgangsbohrungen kaum das Gewicht der zu kühlenden Rotorhohlwelle. Zudem kann das Kühlmittel wegen der ohnehin kleinen Flächen nur in geringem Maße an die zu kühlenden Bauteile, insbesondere an das sich besonders erwärmende Blechpaket herangeführt werden. Das Kühlmittel benetzt oft nur kleine Flächen an der erwärmten Oberfläche und es kommt zu keiner großflächigen Verteilung über den gesamten Umfang

Anderenfalls ist es möglich, dass mit großen Leitungsquerschnitten und Hohlräumen in der Rotorhohlwelle nicht nur eine große Oberfläche zur Wärmeübertragung, sondern auch eine besonders leichte Bauweise realisierbar ist. Allerdings ist es in dem Fall nachteilig, dass der Hohlzylinder im Betrieb nahezu vollständig mit Kühlmittel angefüllt werden muss, was den Kühlmittelbedarf erhöht und wiederum zur Zunahme der bewegten Masse führt, die durch die Leichtbauweise gerade vermieden werden sollte.

In Betrachtung der Strömungsmechanik kann dies zu einer ungleichmäßigen und folglich nicht hinreichenden Kühlung der Rotorhohlwelle und folglich des gesamten elektrischen Motors führen.

Aus der EP 1 892 512 A2 ist ein Rotor mit einer mehrteiligen, insbesondere dreiteiligen gebauten Rotorwelle bekannt geworden. Eine rohrförmige, nicht mitdrehende Lanze ist in den Rotor eingeschoben, wobei diese ein äußeres Ende aufweist, das einen Anschluss für die Zufuhr von gasförmigem Kühlmedium aufweist.

Ferner ist aus der US 2012/0299404 A1 eine Rotorhohlwelle bekannt geworden, die Öffnungen aufweist, um ein Kühlmedium in den Bereich der Wicklungen zu entlassen.

Auch ist aus der DE 29 00 133 A1 eine gebaute, zumindest zweiteilige Rotorwelle eines Rotors bekannt geworden, bei welcher beidseitig an dem Zylindermantel Stirnflansche angeordnet sind. Auch ist aus der DE 29 00 133 A1 ein senkrecht zur Längsachse symmetrisch ausgebildetes Kühlmediumverteilelement bekannt geworden. Wenngleich hier bereits brauchbare Rotorhohlwellen mit einem Kühlmediumverteilelement bekannt geworden sind, so besteht dennoch Bedarf an Verbesserung, insbesondere hinsichtlich einer möglichst vollflächigen und effizienten Kühlung des Rotors.

Demzufolge ist es die Aufgabe der vorliegenden Erfindung eine gebaute Rotorhohlwelle für den Rotor einer elektrischen Maschine zu schaffen, welche einfach und kostengünstig zu fertigenden ist und welche eine vollflächige und effiziente Kühlung des Rotors ermöglicht. Zudem ist es die Aufgabe, einen entsprechenden Rotor sowie eine entsprechende elektrische Maschine vorzuschlagen.

Diese Aufgaben werden durch eine Rotorhohlwelle mit den Merkmalen gemäß Anspruch 1, einen Rotor mit den Merkmalen gemäß Anspruch 12 und eine elektrische Maschine mit den Merkmalen gemäß Anspruch 13 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Rotorhohlwelle beschrieben sind, selbstverständlich auch im Zusammenhang mit dem erfindungsgemäßen Rotor und der erfindungsgemäßen elektrischen Maschine und jeweils umgekehrt, so dass bezüglich der Offenbarung zu den einzelnen Erfindungsaspekten stets wechselseitig Bezug genommen wird beziehungsweise werden kann.

Die erfindungsgemäße gebaute Rotorhohlwelle für einen um eine Längsachse rotierenden Rotor einer elektrischen Maschine weist einen Zylindermantel, welcher einen Wellenhohlraum umgibt, sowie beidseitig an dem Zylindermantel angeordnete Stirnflansche, wobei sich an den Stirnflanschen jeweils ein Wellenzapfen befindet, auf. In einem der Stirnflansche, insbesondere in dessen Wellenzapfen ist ein Einlass vorgesehen, über welchen ein Kühlmedium in den Wellenhohlraum und an eine Innenfläche des Zylindermantels leitbar ist. Innerhalb des Wellenhohlraums ist ein sich senkrecht zur Drehachse symmetrisch ausgebildetes Kühlmediumverteilelement angeordnet, welches derart ausgebildet ist, dass das über den Einlass eintretende Kühlmedium über einen Aufnahmebereich des Kühlmediumverteilelementes aufnehmbar ist, über einen Ableitbereich des Kühlmediumverteilelementes in Richtung der Innenfläche des Zylindermantels führbar ist und über einen Abgabebereich des Kühlmediumverteilelementes auf die Innenfläche des Zylindermantels abgebbar ist. Vorteilhaft ist demnach unmittelbar hinter dem Einlass der Rotorhohlwelle das Kühlmediumverteilelement im Wellenhohlraum der Rotorhohlwelle angeordnet, welches ein über den Einlass eintretendes Kühlmedium aufnimmt, weiterleitet bzw. verteilt sowie an einer vorbestimmten Stelle in den Wellenhohlraum freigibt und dort an die Innenfläche des Zylindermantels abgibt.

Der Ableitbereich des Kühlmediumverteilelementes, welcher vorteilhaft rotationssymmetrisch, insbesondere längsachsensymmetrisch ausgebildet ist, dient hierbei zum einen zur Vermeidung von Unwuchten und zum anderen zur Leitung bzw. Führung des Kühlmediums radial nach außen in Richtung der Innenfläche des Zylindermantels sowie zur gleichmäßigen Verteilung des Kühlmediums entlang der gesamten Innenfläche des Zylindermantels. Insbesondere die symmetrische Geometrie des Kühlmediumverteilelementes ermöglicht vorteilhaft die gleichmäßige und vollumfängliche Verteilung des Kühlmediums, welches beispielsweise als flüssiges oder gasförmiges Fluid vorliegt, aufgrund des aus der Strömungsmechanik bekannten Fließverhaltens von bewegten Fluiden entlang stehender bzw. unbewegter Wandungen bzw. unbewegter bzw. stehender Fluide an bewegten Wandungen. Das bedeutet, dass ein in Bewegung versetztes Fluid bei Auftreffen auf eine stehende Wand - wie beispielsweise dem ruhenden Zylindermantel - aufgrund der an der Wandoberfläche auftretenden Haftreibungskräfte keine Geschwindigkeit und folglich kein Fließverhalten an dieser Wand aufweist. Demnach wird die Bewegung des bewegten Fluides von der Wand gebremst. Die Geschwindigkeit und demnach das Fließverhalten des Fluides tritt auf und erhöht sich mit zunehmendem Abstand des bewegten Fluides von der stehenden Wandung aufgrund der abnehmenden Haftreibungskraft. Bei Vorliegen des umgekehrten Falles, sprich die zu kühlende Wandung befindet sich in Bewegung, beispielsweise in Drehbewegung bzw. Rotationsbewegung um eine entsprechende Drehachse, und das Fluid weist keine Geschwindigkeit auf, wird im wandnahen Bereich aufgrund der auftretenden Haftreibungskräfte eine Geschwindigkeit in das Fluid initiiert, das bedeutet, dass das Fluid mitgerissen wird. In Betrachtung der Strömungsmechanik bei einer Rotorhohlwelle eines zu kühlenden Rotors einer elektrischen Maschine wird demnach das System bestrebt sein ein Gleichgewicht einzustellen und folglich unterschiedliche Geschwindigkeitsgradienten - bewegte Wandung der Rotorhohlwelle und ein in Bewegung versetztes Fluid aufgrund des Einbringens in den Wellenhohlraum - auszugleichen. Ein Mitreißen des Kühlmediums erfolgt vorteilhaft an allen sich innerhalb des Wellenhohlraums angeordneten Bauteilen, wie insbesondere dem Kühlmediumverteilelement. Demnach wird das Kühlmedium entlang der Innenfläche des Zylindermantels genauso in Bewegung versetzt, wie an der Oberfläche des Kühlmediumverteilelementes. Bei einer ausgeglichen Wandungsverteilung innerhalb des Wellenhohlraumes, welche insbesondere mittels des rotationssymmetrischen und längsachsensymmetrischen Aufbaus des Kühlmediumverteilelementes ermöglicht wird, erfolgt demnach eine gleichmäßige Verteilung des Kühlmediums entlang der Innenfläche des Zylindermantels der Rotorhohlwelle - zumindest in Längsachsenrichtung betrachtet - und demnach eine gleichmäßige Benetzung dieser Innenfläche. Vorteilhaft ist der Ableitbereich aus einem dünnwandigen Material, insbesondere aus einem Kunststoffmaterial oder aus einem Blech gefertigt.

Damit das Kühlmedium auch in Umfangsrichtung der Rotorhohlwelle eine gleichmäßige Verteilung entlang der Innenfläche des Zylindermantels erfährt, dient vorteilhaft der Abgabebereich. Der Abgabebereich des Kühlmediumverteilelementes dient zur Abgabe des Kühlmediums auf die Innenfläche des Zylindermantels. Dabei wird vorteilhaft die kinetische Energie des Rotors und demnach der Rotorhohlwelle zum Transport des Kühlmediums verwendet. So verläuft der Kühlmediumtransport, von der Zentrifugalkraft getrieben, von der Rotorachse hin zum Ort des Wärmeaustauschs. Die Abgabe des Kühlmediums aus dem Wellenhohlraum hinaus, erfolgt vorteilhaft durch Öffnungen, welche im Zylindermantel oder im Außenbereich der Stirnflansche vorgesehen sind. Vorteilhaft erfolgt keine vollständige Spülung der Innenfläche, insbesondere des Zylindermantels der Rotorhohlwelle, sondern vielmehr eine Benetzung der zu kühlenden Oberfläche mit dem Kühlmedium.

Vorteilhaft weist die Rotorhohlwelle einen großvolumigen Wellenhohlraum auf, wobei im Rahmen der Erfindung als großvolumiger Wellenhohlraum ein solcher erachtet wird, bei dem das Verhältnis vom Durchmesser des Wellenhohlraumes zum Durchmesser des Wellenzapfens (insbesondere dem Durchmesser des Lagers) größer als 1,5, vorteilhaft größer als 2 ist.

Wegen der geringeren Temperaturen kann insbesondere bei definierter Bauteilgrenztemperatur eine höhere Leistung des Rotors erreicht werden, so dass sich ein verbessertes Leistungsgewicht respektive Leistungsvolumen der elektrischen Maschine ergibt. Mit der Erfindung ist somit eine leichtbauorientierte Konzeption des Rotors bei geringem Kühlmediumeinsatz und besonders effizienter Kühlung möglich. Dabei ist es besonders vorteilhaft, dass die zu rotierende Masse trotz des Kühlmediuminhaltes gering bleibt.

Ein besonderer Vorteil des Kühlmediumverteilelementes ist, dass am gebauten Rotor bzw. an der gebauten Rotorhohlwelle lediglich geringfügige bauliche Veränderungen vorgenommen werden müssen, um das Kühlungskonzept zu realisieren. Das zusätzliche Kühlmediumverteilelement kann über eine einfache Anschlussgeometrie mit dem Rotor und den Zuleitungen verbunden werden, so dass ein einfacher Kühlsystemaufbau mit einer minimalen Anzahl an Zusatzkomponenten gegeben ist. Besonders vorteilhaft lässt sich die Erfindung bei mehrteiligen, gebauten Leichtbaurotorhohlwellen umsetzen.

Vorteilhaft wird mit einer geringen Menge an Kühlmedium und entsprechend kleinem Volumenstrom nur derart viel von dem gesamten Wellenhohlraum durchströmt, dass lediglich die für den Wärmeaustausch wesentliche Innenfläche des Zylindermantels des Wellenhohlraums benetzt wird. Dabei findet eine vollumfängliche Kühlmediumbeaufschlagung bzw. Kühlmediumbenetzung bereits bei Auftreffen des Kühlmediums auf die zu kühlende Oberfläche statt. Das Kühlmedium und dessen direkte Benetzung bzw. Beaufschlagung der Wand am Ort der Wärmeentstehung tragen damit zu einer optimalen Wärmeabfuhr trotz geringer Kühlmediummenge bei.

Aufgrund der gekühlten Komponenten wird vorteilhaft die nutzbare Leistung der gesamten elektrischen Maschine zusätzlich erhöht und der Einfluss der Kühlung auf das Beschleunigungsverhalten minimiert. Ein weiterer Vorteil liegt darin, dass die Kühlung, besonders vorteilhaft die Flüssigkeitskühlung, lediglich mit unwesentlichen baulichen Veränderungen am Rotor einhergeht und sogar als Baukastenlösung mit minimalem Zusatzaufwand realisierbar ist.

Vorteilhaft teilt das Kühlmediumverteilelement den Wellenhohlraum symmetrisch auf. Demnach entstehen innerhalb des Wellenhohlraums beidseitig der Symmetrieachse zwei geometrisch zueinander gleich große Flächenanteile, welche vorteilhaft als rotierende Querschnitte für entsprechend gleiche Geschwindigkeits- und Druckverhältnisse der in der Rotorhohlwelle enthaltenen Luftmenge sorgen. Eine für die Gleichverteilung schädliche Beeinflussung der Wandbenetzung mit dem Kühlmedium wird dadurch wirksam vermieden. Im Rahmen der Erfindung erstreckt sich die Symmetrieachse senkrecht zur Längsachse der Rotorhohlwelle und teilt den Wellenholraum in zwei zueinander gleich große Teile. Besonders vorteilhaft erstreckt sich das Kühlmediumverteilelement folglich symmetrisch entlang der Symmetrieachse sowie auch entlang der Längsachse der Rotorholwelle.

Im Rahmen der Erfindung ist es vorgesehen, dass das Kühlmediumverteilelement eine sphäroidische Gestalt aufweist. Diese sphäroidische Gestalt ist dabei vorteilhaft kugelförmig oder eiförmig. Vorteilhaft erstreckt sich bei Vorliegen unterschiedlich ausgeprägter Dimensionen bzw. Umfänge des sphäroidisch gestalteten Kühlmediumverteilelementes bzw. dessen Ableitbereiches, der größte Umfang entlang der Längsachse, das bedeutet axial.

Es ist des Weiteren denkbar, dass das Kühlmediumverteilelement sich ausgehend von einem der Stirnflansche bis zu dem anderen der Stirnflansche innerhalb des Wellenhohlraums erstreckt. Vorteilhaft erstreckt sich der Ableitbereich des Kühlmediumverteilelementes vollständig innerhalb des Wellenholraums entlang dessen vollständiger Länge in Axialrichtung betrachtet. Hierdurch wird vorteilhaft das Bewegen des Kühlmediums entlang der Wandungsoberfläche des Zylindermantels über die gesamte Länge - in Axialrichtung betrachtet - des Zylindermantels ermöglicht. Um das Kühlmedium aufzunehmen und entlang des Ableitbereiches, insbesondere der inneren Oberfläche des Ableitbereiches zu transportieren, weist das Kühlmediumführungselement einen Aufnahmebereich auf, welcher sich vorteilhaft zumindest abschnittsweise innerhalb eines der Stirnflansche, insbesondere innerhalb bzw. entlang des Einlasses innerhalb eines der Stirnflansche erstreckt. Der Aufnahmebereich ist derart in den Einlass des Stirnflansches eingebracht, dass dieser Aufnahmebereich gleichzeitig auch als Lager dient, um das Kühlmediumführungselement zumindest an der Einlassseite der Rotorhohlwelle, an welcher das Kühlmedium in die Rotorhohlwelle eingebracht wird, zu lagern und vorteilhaft drehfest mit der Rotorhohlwelle zu verbinden.

Es ist möglich, dass das Kühlmediumverteilelement einen Lagerungsbereich aufweist, welcher zur Lagerung des Kühlmediumverteilelementes an dem Stirnflansche dient, welcher gegenüber dem Stirnflansch angeordnet ist, der den Einlass aufweist. Demnach ist das Kühlmediumführungselement vorteilhaft beidseitig, insbesondere an den Stirnflanschen der Rotorhohlwelle abgestützt bzw. gelagert. Hierdurch werden ungewollt auftretende Unwuchten, ausgelöst durch eine unvorteilhafte Lagerung des Kühlmediumverteilelementes innerhalb des Wellenhohlraumes, vermieden. Zudem ist die Anwendung von zusätzlichen Elementen, wie beispielsweise Abstützpins vermeidbar, welche zu einer negativen Beeinflussung der Verteilung des Kühlmediums führen können. Ebenso vermeidet diese Lagerung enge Passtoleranzen am Rotorinnendurchmesser und am Außendurchmesser des Ableitbereiches des Kühlmediumverteilelementes, ebenso wie einen zu engen Querschnitt am Austrittsbereich des Kühlmediums, insbesondere am Abgabebereich.

Es ist vorgesehen, dass der Abgabebereich in der Mitte der axialen Ausdehnung des Ableitbereiches ausgebildet ist. Dies führt vorteilhaft dazu, dass sich das Kühlmedium nach dem Auftreffen auf die Innenfläche des Zylindermantels gleichmäßig in beide Richtungen - entlang der Längsachse - verteilt. Das bedeutet, dass sich das an dieser Stelle abgegebene Kühlmedium insbesondere bei drehender Rotorhohlwelle nach beiden Seiten nahezu homogen über die Innenfläche des Zylindermantels verteilt.

Es ist ebenfalls möglich, dass der Abgabebereich im Bereich der maximalen radialen Ausdehnung des Ableitbereiches ausgebildet ist. Sofern die maximale radiale Ausdehnung in axialer Richtung betrachtet beispielsweise außermittig ausgebildet ist oder sofern sich diese maximale Ausdehnung entlang der sich axial erstreckenden Längsachse über einen weiteren Bereich erstreckt, ist demnach auch der Abgabebereich in axialer Richtung betrachtet derart außermittig ausgebildet, dass dieser gegenüber einem der beiden Stirnflansche eine geringere Beabstandung aufweist als gegenüber dem anderen der beiden Stirnflansche. Eine derartige außermittige Anordnung bzw. Ausbildung des Abgabebereiches führt beispielsweiser zu einer definierten und bestimmten, insbesondere gewollten ungleichmäßigen Beaufschlagung der Innenfläche der Rotorhohlwelle mittels des Kühlmediums entlang der Längsachse. Insbesondere erhöht sich der Kühlmediumstrom in dem Bereich der Rotorhohlwelle, in welchem der Abgabebereich einen geringeren Abstand zum Stirnflansch aufweist. Dies ist insbesondere vorteilhaft, wenn beispielsweise zusätzlich zur Kühlung der Rotorhohlwelle bzw. des Rotors auch ein die Rotorhohlwelle lagerndes Lager bzw. ein Teil dieses Lagers mittels des eingebrachten Kühlmediums gekühlt werden soll.

In Hinblick auf einen guten Übertrag des Kühlmediums auf die Innenfläche des Zylindermantels und auf eine gleichmäßige Verteilung des Kühlmediums ist es möglich, dass wenigstens der Abgabebereich des Kühlmediumverteilelementes einen geringen Abstand zur Innenfläche des Zylindermantels aufweist.

Eine hinreichende Abgabe des Kühlmediums auf die Innenfläche des Zylindermantels ist für eine ausreichende Kühlung des Rotors erforderlich, sodass der Abgabebereich eine hinreichende Anzahl von Durchlassöffnungen aufzuweisen hat, um die Abgabe des Kühlmediums aus dem Ableitbereich des Kühlmediumverteilelementes zu gewährleisten. Hierfür weist der Abgabebereich des Kühlmediumverteilelementes wenigstens eine Austrittsöffnung, insbesondere vorteilhaft eine Mehrzahl an radialen Austrittsöffnungen auf, welche über den Umfang des Kühlmediumverteilelementes verteilt in gleichem Abstand zueinander ausgebildet sind.

Um eine nur örtliche bzw. punktuelle Abgabe des Kühlmediums auf die Innenfläche des Zylindermantels zu vermeiden, was zu einer nicht vollflächigen Benetzung der Innenfläche mit dem Kühlmedium führt, weist das Kühlmediumverteilelement vorteilhaft auf dessen Innenfläche wenigstens eine Struktur zur Verteilung des Kühlmediums über den gesamten Umfang des Kühlmediumverteilelementes auf. Besonders vorteilhaft ist eine Mehrzahl von Strukturen, welche als Leitstrukturen und/oder Verteilstrukturen zur Anwendung gelangen auf der Innenfläche des Kühlmediumverteilelementes, insbesondere im Ableitbereich des Kühlmediumverteilelementes ausgebildet bzw. angeordnet. Es ist möglich, dass diese Strukturen zueinander in gleichem Abstand beabstandet angeordnet sind. Es ist jedoch auch denkbar, dass diese Strukturen eine zueinander unterschiedliche Abstände aufweisende Anordnung auf der Innenfläche des Kühlmediumverteilelementes besitzen. Vorteilhaft wird mit Hilfe der wenigstens einen Struktur eine (Gleich-)Verteilung des Kühlmediums über den gesamten Winkelumfang des Kühlmediumverteilelementes, insbesondere um 360° bewirkt, sodass das Kühlmediumverteilelement das Kühlmedium axial und umfänglich entlang der Innenfläche des Zylindermantels der Rotorhohlwelle gleich verteilt.

Vorteilhaft ist die Struktur bzw. sind die Strukturen in Richtung des Hohlraumes des Kühlmediumverteilelementes konvex ausgebildet. Demnach ist die wenigstens eine Struktur folglich nicht scharfkantig ausgebildet.

Es ist des Weiteren denkbar, dass der Einlass von mehreren auf dem Umfang des Wellenzapfens gleich verteilter Einlasskanäle gebildet ist, welche im Aufnahmebereich des Kühlmediumverteilelementes münden. Das über solche Einlasskanäle in separaten Strömen zugeführte Kühlmedium wird durch die Rotation und die daraus folgende Zentrifugalkraft sowie vorteilhaft auch durch die Strukturen auf der Ableitfläche homogenisiert. Zusätzlich lässt sich neben der erfindungsgemäßen Kühlung ein weiterer separater Medientransport durch den Rotor realisieren. Für diesen ist innerhalb der Rotorhohlwelle ein Durchleitungselement, insbesondere in Form eines Rohrstücks, vorgesehen. Es ist denkbar, dass das Rohrstück den Hohlraum von einem Wellenzapfen zum anderen durchragt, wodurch eine kombinierte Anordnung zur rotorintegrierten Kühlung bei separatem Medientransport durch die Rotorhohlwelle ermöglicht ist. Beide Medienströme können getrennt ein- und ausgeleitet werden und sind daher auch für verschiedene Betriebszustände zu- und abschaltbar.

Die Abfuhr des Kühlmediums ist vorteilhaft durch Öffnungen im Zylindermantel oder in den Stirnflanschen möglich. Besonders vorteilhaft ist es, das im Wellenhohlraum befindliche und abzuführende Kühlmedium zu nutzen, um die den Rotor umgebenden Statorspulen zu kühlen. Dazu ist im Zylindermantel der Rotorhohlwelle zumindest eine Durchlassöffnung, vorteilhaft eine Mehrzahl von Durchlassöffnungen vorgesehen, aus denen das Kühlmedium bei drehender Rotorhohlwelle in radialer Richtung herausgeleitet wird und den umgebenden Stator benetzt. Um eine gleichmäßige Benetzung zu erreichen, ist es vorteilhaft, wenn die Durchlassöffnungen in den Randbereichen des Zylindermantels jeweils über den Umfang gleichverteilt angeordnet sind.

Es ist ebenfalls denkbar, dass die Durchlassöffnungen, welche in einem Randbereich des Zylindermantels ausgebildet sind gegenüber den Durchlassöffnungen, welche in einem anderen Randbereich des Zylindermantels ausgebildet sind, über den Umfang versetzt zueinander angeordnet sind. Eine Anordnung der Durchlassöffnungen auf der Winkelhalbierenden, wie zuvor beschrieben, hat den Vorteil, dass bei ausgeschaltetem Elektromotor und folglich bei stehender Rotorhohlwelle ein Abfließen des sich aufgrund der Schwerkraft am tiefliegendsten Bereich der Rotorhohlwelle angesammelten Kühlmediums aus dem Wellenhohlraum erfolgt. Hierdurch wird vorteilhaft auch das Auftreten von Unwuchten beim Anfahren des Elektromotors und folglich des Rotors, insbesondere der Rotorhohlwelle vermieden.

Über die Anzahl und den Durchmesser der einzelnen Einlasskanäle sowie die Anzahl und Durchmesser der radial auf dem Umfang verteilten Austrittsöffnungen ist es möglich die Kühlmediumströmung und die vorhandene Kühlmediummenge im Rotor einzustellen und folglich die Kühlleistung zu regeln.

Es ist denkbar, dass der Rotor an einer Stirnseite über eine, unter Umständen aus mehreren Zuleitungen bestehende, Kühlmediumzuführung verfügt, die als zentrische Axialbohrung eines Bauteils, welches Teil der Rotorhohlwelle ist, ausgebildet ist. Die Zuleitung mündet vorteilhaft in dem Kühlmediumverteilelement, das unmittelbar mit der radialen Aufweitung des hohlzylindrischen Bereiches der Rotorhohlwelle beginnt. Durch diese Anordnung wird eine sprungartige, massive Querschnittsvergrößerung, wie typisch für eine Leichtbaurotorauslegung, überbrückt. Nach der Übergabe des Kühlmediums an das Kühlmediumverteilelement wird das Kühlmedium infolge der Rotation des Rotors und der daraus resultierenden Zentrifugalkraft sowie der Druckdifferenz zwischen Kühlmediumkreislauf und Rotorumgebung auf die Innenfläche des Zylindermantels der gebauten Rotorhohlwelle geleitet. Das Kühlmedium trifft hierbei nahezu mittig auf diese Innenfläche auf. Diese mittige Einleitung des Kühlmediums sowie dessen umfängliche Verteilung während der Fließstrecke vom Kühlmediumeintritt zur Abgabe an die Innenfläche sind die Aufgaben des Kühlmediumverteilelementes. Aufgrund des nachströmenden Kühlmediums und der Zentrifugalkräfte bildet sich im Folgenden eine Verteilung der Strömung aus, die das Kühlmedium beidseitig axial nach außen führt. Dabei sind Anzahl und Durchmesser der Kühlmediumzuleitungen derart zu konzipieren, dass eine effiziente Kühlung, bei einem möglichst geringem Energie- und Volumenverbrauch des Kühlmediums, erzielt wird. Das Kühlmediumverteilelement ist hierbei kraft-, stoff- oder formschlüssig mit dem Zuleitungselement verbunden.

Die sprungartige Querschnittsvergrößerung innerhalb der Hohlwelle garantiert eine besonders leichte Bauweise und eine enorme Zunahme der zur Wärmeübertragung zur Verfügung stehenden Fläche. Vorteilhaft ist, dass das Kühlmedium gezielt an die Innenfläche des Zylindermantels geleitet wird und dort in besonderer Nähe am aktiven, zu kühlenden Blechpaket entlang strömt. Vorteilhaft ist nicht der gesamte Wellenhohlraum mit Kühlmedium gefüllt. Vielmehr ist lediglich die Innenfläche des Zylindermantels der Rotorhohlwelle mit dem Kühlmedium vollumfänglich beaufschlagt. Die Verteilung des Kühlmediums geschieht mit Hilfe der Zentrifugalkraft.

Durch die unmittelbare Übergabe des Kühlmediums an das Kühlmediumverteilelement bei Eintritt in den Wellenhohlraum wird eine auf das minimal erforderliche Maß reduzierte Zwangsführung des Kühlmittels erreicht. Dies reduziert die Druckverluste und die Strömungswiderstände. Dadurch kann die Verwendung einer Kühlmittelpumpe vermieden werden.

Des Weiteren ist ein Rotor aufweisend eine mit Blechpaketen bestückte Rotorhohlwelle gemäß der oben genannten Art beansprucht. Bei dem erfindungsgemäßen Rotor ergeben sich sämtliche Vorteile, die bereits zu einer Rotorhohlwelle gemäß dem ersten Aspekt der Erfindung beschrieben worden sind.

Ein weiterer Aspekt der Erfindung ist eine elektrische Maschine, insbesondere ein Asynchronmotor oder eine permanent erregte Synchronmaschine, welche einen Rotor der oben genannten Art aufweist. Vorteilhaft wird mit der erfindungsgemäßen elektrischen Maschine eine Steigerung des Wirkungsgrades sowie deren Performance ermöglicht. Des Weiteren ist es möglich die elektrische Maschine in verkleinerter Bauweise bei unverändert benötigter Antriebsleistung herzustellen. Ebenfalls ist eine Erhöhung der nutzbaren Überlastungsdauer möglich. Ausführungsformen einer erfindungsgemäßen Rotorhohlwelle werden nachfolgend anhand von Zeichnungen näher erläutert. Es zeigen jeweils schematisch:
- Figur 1: in einer seitlichen Schnittdarstellung eine Ausführungsform einer erfindungsgemäßen gebauten Rotorhohlwelle mit kugelförmigem Kühlmediumverteilelement,
- Figur 2: eine perspektivische Ansicht der in Figur 1 als Schnitt dargestellten Ausführungsform einer erfindungsgemäßen gebauten Rotorhohlwelle,
- Figur 3: in einer seitlichen Schnittdarstellung eine weitere Ausführungsform einer erfindungsgemäßen gebauten Rotorhohlwelle mit eiförmigem Kühlmediumverteilelement,
- Figur 4: eine perspektivische Ansicht der in Figur 3 als Schnitt dargestellten weiteren Ausführungsform einer erfindungsgemäßen gebauten Rotorhohlwelle,
- Figur 5: in einer seitlichen Schnittdarstellung eine nicht erfindungsgemäße weitere Ausführungsform einer erfindungsgemäßen gebauten Rotorhohlwelle mit kreiszylinderförmigem Kühlmediumverteilelement, und
- Figur 6: eine perspektivische Ansicht der in Figur 5 als Schnitt dargestellten weiteren Ausführungsform einer nicht erfindungsgemäß gebauten Rotorhohlwelle.

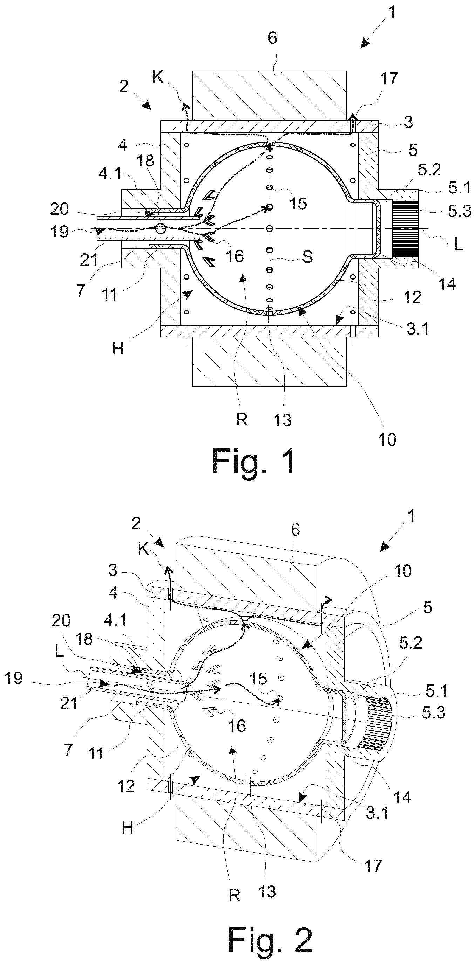

In Fig. 1 ist schematisch in einer seitlichen Schnittdarstellung eine Ausführungsform einer erfindungsgemäßen gebauten Rotorhohlwelle 2 mit kugelförmigem Kühlmediumverteilelement 10 bzw. mit kugelförmigem Ableitbereich 12 des Kühlmediumverteilelementes 10 gezeigt. Die Rotorhohlwelle 2 ist ein Bestandteil eines Rotors 1, welcher ein an der Rotorhohlwelle 2 angeordnetes Blechpaket 6 aufweist. Bekannter Weise besteht das Blechpaket 6 aus einer Vielzahl von hier nicht im Detail dargestellten Blechen, welche zu dem Blechpaket 6 zusammengefügt sind. Die Rotorhohlwelle 2 weist einen Zylindermantel 3 sowie zwei Stirnflansche 4, 5 auf, welche derart mit dem Zylindermantel 3 verbunden sind, dass hierdurch ein nach Außen zumindest abschnittsweise abgeschlossener Wellenhohlraum H entsteht, innerhalb welchem das Kühlmediumverteilelement 10 angeordnet ist. Jeder Stirnflansch 4, 5 weist jeweils einen Wellenzapfen 4.1 bzw. 5.1 auf, welcher beispielsweise zumindest zur Lagerung des Rotors 1 oder zur Anbindung des Rotors 1 an ein Getriebe etc. dienlich ist. Hierbei ist es denkbar, dass in einer Aussparung, wie mit dem Bezugszeichen 5.2 beispielhaft dargestellt, eine Verzahnung 5.3, insbesondere eine Innenverzahnung ausgebildet ist, welches mit einer entsprechenden (hier nicht gezeigten) Außenverzahnung eines anzuordnenden Bauteils in Wechselwirkung treten kann.

Das Kühlmediumverteilelement 10, insbesondere dessen Ableitbereich 12 ist in der in Fig. 1 gezeigten Ausführungsform sphäroidisch, insbesondere kugelförmig ausgebildet. Das Kühlmediumverteilelement 10 weist einen Aufnahmebereich 11, einen Ableitbereich 12, einen Abgabebereich 13 und einen Lagerbereich 14 auf. Der Aufnahmebereich 11 dient zum Aufnehmen eines Kühlmediums K (schematisch als gestrichelte Linie dargestellt), welches über den Einlass 7, der in einem der Stirnflansche 4 ausgebildet ist, in den Hohlraum R des Kühlmediumverteilelementes 10 eingebracht wird. Der Aufnahmebereich 11 erstreckt sich ausgehend vom Ableitbereich 12 in Gestalt eines Rohres zumindest abschnittsweise in den Einlass 7 und folglich zumindest abschnittsweise in den Wellenzapfen 4.1 des Stirnflansches 4 der Rotorhohlwelle 2 hinein. Der Durchmesser des Aufnahmebereiches 11 ist vorteilhaft geringer als der Durchmesser des Ableitbereiches 12 des Kühlmediumverteilelementes 10. Der Aufnahmebereich 11 dient vorteilhaft als Öffnung, insbesondere Einlassöffnung des Kühlmediumverteilelementes 10. Gegenüberliegend zum Aufnahmebereich 11 ist der Lagerbereich 14 an schließend an den Ableitbereich 12 ausgebildet. Der Ableitbereich 12 ist demnach zwischen dem Aufnahmebereich 11 und dem Lagerbereich 14 ausgebildet. Der Lagerbereich 14 ist vorteilhaft in Gestalt eines Vorsprunges bzw. einer Auswölbung ausgebildet und erstreckt sich in eine Aussparung 5.2 des Stirnflansches 5 hinein, welcher an der Stirnseite des Zylindermantels 3 angeordnet ist, die der Stirnseite gegenüberliegt, an welcher der andere Stirnflansch 4, welcher einen Einlass 7 aufweist, angeordnet ist. Das Kühlmediumverteilelement 10 erstreckt sich entlang der Längsachse L. Senkrecht zur Längsachse L ist die Symmetrieachse S ausgebildet, welche das Kühlmediumverteilelement 10 geometrisch mittig teilt. Das Kühlmediumverteilelement 10 ist hinsichtlich der Längsachse L sowie hinsichtlich der Symmetrieachse S symmetrisch ausgebildet. Demnach ist das Kühlmediumverteilelement 10 vorteilhaft längsachsensymmetrisch und symmetrieachsensymmetrisch ausgebildet. Auf der Symmetrieachse S gelegen, erstreckt sich in Umfangsrichtung des Kühlmediumverteilelementes 10 der Abgabebereich 13 des Kühlmediumverteilelementes 10. Der Abgabebereich 13 weist eine Mehrzahl an Austrittsöffnungen 15 auf, welche in gleichem Abstand zueinander in Umfangsrichtung des Kühlmediumverteilelementes 10 verteilt in dessen Wandung ausgebildet sind. Die Austrittsöffnungen 15 dienen zur Abgabe des Kühlmediums K aus dem Hohlraum R des Kühlmediumverteilelementes 10 in den Wellenhohlraum H, insbesondere auf die Innenfläche 3.1 des Zylindermantels 3 der Rotorhohlwelle 2.

Vorteilhaft ist das Kühlmediumverteilelement 10 als Kunststoffblasteil, erzeugt aus einem Blasformrohling, hergestellt. Der Aufnahmebereich 11 des Kühlmediumverteilelementes 10 dient hierbei besonders vorteilhaft als einzige Eintrittsöffnung zum Einbringen des Druckmediums, um den Blasformrohling zu dessen endgültiger Gestalt zu expandieren. Auch Strukturen 16 können mittels dieses Verfahrens auf der Innenfläche 3.1 des Kühlmediumverteilelementes 10, insbesondere dem Ableitbereich 12 des Kühlmediumverteilelementes 10 erzeugt werden.

Die in der Fig. 1 gezeigten Strukturen 16 dienen als Leitstrukturen bzw. Verteilstrukturen und sind an der inneren Oberfläche des Kühlmediumverteilelementes 10, insbesondere des Ableitbereiches 12 ausgebildet. Die Strukturen 16 weisen, wie beispielhaft dargestellt, eine V-förmige Gestalt auf, wobei sich die V-Schenkel der jeweiligen Strukturen 16 jeweils in Richtung des Abgabebereiches 13 erstrecken.

Durch den Einlass 7 erstreckt sich ein Rohrstück 21, welches einen Außendurchmesser aufweist, der kleiner ist, als der Innendurchmesser des Einlasses 7. Dadurch werden zueinander unterschiedliche Einlasskanäle 19, 20 erzeugt, wobei der am Außenumfang des Rohrstückes 21 erzeugte Einlasskanal 20 einen geringeren Strömungsquerschnitt aufweist, als der Einlasskanal 19, welcher mittels des Rohrdurchganges des Rohrstückes 21 gebildet ist. Es ist möglich, dass das Rohrstück 21 eine radiale Öffnung 18 aufweist, durch welche das Kühlmedium K aus dem einen Einlasskanal 19 in den anderen Einlasskanal 20 übertritt.

In der Fig. 2 ist in einer perspektivischen Ansicht die in der Fig. 1 gezeigte Schnittdarstellung einer Ausführungsform einer erfindungsgemäßen Rotorhohlwelle 2 mit angeordnetem Blechpaket 6 gezeigt. Bei dieser Ansicht zeigt sich die sphäroidische Gestalt des Kühlmediumverteilelementes 10, dessen Ableitbereich 12 kugelförmig ausgebildet ist. Der Aufnahmebereich 11 sowie der Lagerungsbereich 14 sind in Gestalt von Fortsätzen ausgehend von dem Ableitbereich 12 ausgebildet. Der Abgabebereich 13 weist eine Vielzahl von Austrittsöffnungen 15 auf, welche in Gestalt von Durchgangsbohrungen, wie in den Fig. 1 und 2 gezeigt, oder auch in Gestalt von Langlöcher oder vergleichbarer Form ausgebildet sind. Die Austrittsöffnungen 15 verteilen sich vorteilhaft in Umfangsrichtung des Kühlmediumverteilelementes 10 entlang der Wandung im Abgabebereich 13 bzw. im Ableitbereich 12, wobei mittels der Ausbildung der Austrittsöffnungen 15 der Abgabebereich 13 gebildet ist. Besonders vorteilhaft sind die Austrittsöffnung 15 zueinander gleich beabstandet in Umfangsrichtung verteilt angeordnet, wie in der Ausführungsform gemäß der Fig. 1 und 2 gezeigt. Es ist jedoch auch denkbar, dass die Austrittsöffnungen 15 ungleichmäßig entlang des Umfanges des Ableitbereiches 12 verteilt sind.

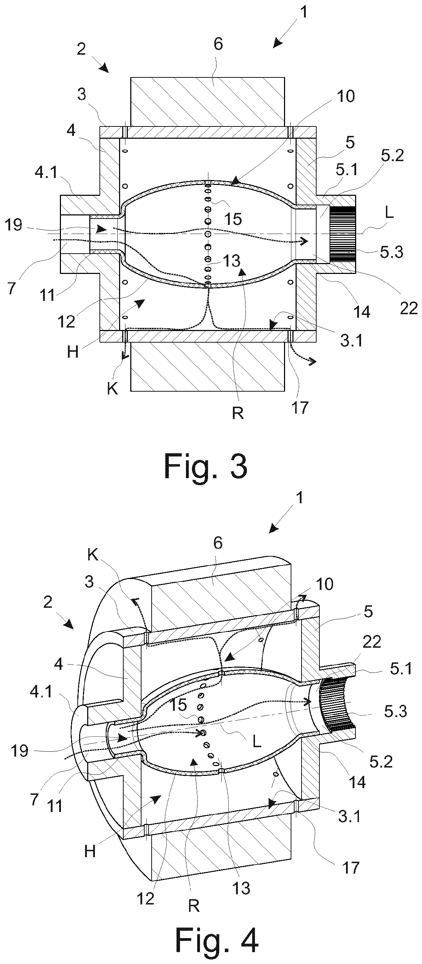

In den Fig. 3 und 4 ist eine weitere Ausführungsform einer erfindungsgemäßen Rotorhohlwelle 2 gezeigt. Diese weitere Ausführungsform unterscheidet sich von der in den Fig. 1 und 2 gezeigten Ausführungsform dadurch, dass das Kühlmediumverteilelement 10, insbesondere der Ableitbereich 12 des Kühlmediumverteilelementes 10 in Gestalt eines eiförmigen Rotationskörpers, insbesondere in Gestalt eines getreckten Rotationsellipsoiden ausgebildet ist. Dabei entspricht die Rotationsachse des Kühlmediumverteilelementes 10 der Rotationsachse der Rotorhohlwelle 2 und folglich der Längsachse L.

Des Weiteren unterscheidet sich die in den Fig. 3 und 4 gezeigte Ausführungsform einer erfindungsgemäßen Rotorhohlwelle 2 von der in den Fig. 1 und 2 gezeigten Ausführungsform dadurch, dass kein zusätzliches Bauteil, wie das in den Fig. 1 und 2 gezeigte Rohrstück 21 in den Einlass 7 eingebacht ist. Demnach ist lediglich ein Einlasskanal 19 ausgebildet, durch welchen hindurch das Kühlmedium K in den Hohlraum R des Kühlmediumverteilelementes 10 eingebracht wird. Auch weist das Kühlmediumverteilelement keine Strukturen 16 auf.

Der Lagerungsbereich 14 des Kühlmediumverteilelementes 10 weist gemäß der Ausführungsform der Fig. 3 und 4 eine Öffnung auf, durch welche hindurch insbesondere überschüssiges Kühlmedium K aus dem Hohlraum R des Kühlmediumverteilelementes 10 hinausgeführt wird. Es ist denkbar, dass demnach das Kühlmedium K nicht nur über die Austrittsöffnungen 15 aus dem Hohlraum R des Kühlmediumverteilelementes 10 in den Wellenhohlraum H der Rotorholwelle 2 und von dort aus weiter über die Durchlassöffnungen 17 zum Blechpaket 6 bzw. zum hier nicht gezeigten Stator der elektrischen Maschine geführt werden kann. Auch ist es möglich, dass zudem ein weiterer Kühlmediumleitweg über den Stirnflansch 5, insbesondere über den Wellenzapfen 5.1 eines der Stirnflansche ermöglicht ist. Hierbei dient vorteilhaft ein Stirnflansch 4, insbesondere der erste Stirnflansch 4 zum Einbringen des Kühlmediums K in die Rotorhohlwelle 2, insbesondere in das Kühlmediumverteilelement 10, während der andere Stirnflansch 5, insbesondere der zweite Stirnflansch 5 zum Ausleiten von Kühlmedium K aus der Rotorhohlwelle 2, insbesondere dem Kühlmediumverteilelement 10 dient. Es ist denkbar, dass das über den zweiten Stirnflansch 5 ausgeleitete Kühlmedium K vorteilhaft Verwendung zur Kühlung des Stators der elektrischen Maschine findet. Der hierfür erforderliche Kühlmediumleitweg ist aus Gründen der Übersichtlichkeit nicht dargestellt.

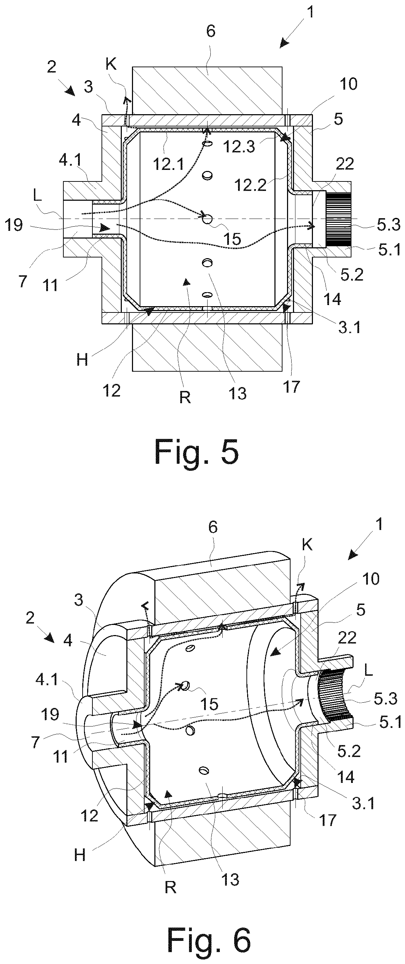

In den Fig. 5 und 6 ist eine Ausführungsform einer Rotorhohlwelle 2 gezeigt, welche sich zu der in den Fig. 3 und 4 gezeigten Ausführungsform dahingehend unterscheidet, dass das Kühlmediumverteilelement 10, insbesondere der Ableitbereich 12 eine eckige Rotationsform, insbesondere eine zylindrische, vorteilhaft eine kreiszylindrische Form aufweist. Dabei ist es möglich, wie in den Figuren 5 und 6 gezeigt, dass zwischen der Mantelfläche 12.1 und der Stirnfläche 12.2 des kreiszylindrischen Ableitbereiches 12 eine Fase 12.3 ausgebildet ist. Vorteilhaft ist das Kühlmediumverteilelement 10 derart dimensioniert, dass es den Wellenhohlraum H nahezu vollständig ausfüllt. Das bedeutet, dass es denkbar ist, dass der Hohlraum R des Kühlmediumverteilelementes 10, insbesondere des Ableitbereiches 12 des Kühlmediumverteilelementes 10 größer ist, als der verbleibende Wellenhohlraum H der Rotorhohlwelle 2.

Die geometrische Gestaltung des Kühlmediumverteilelementes 10 ist nicht auf die in den Fig. 1 bis 4 gezeigten geometrischen Formen beschränkt. Vielmehr ist jedwede geometrische Form denkbar, welche dazu geeignet ist eine gleichmäßige Verteilung des Kühlmediums K entlang der Innenfläche 3.1 des Zylindermantels 3 zu ermöglichen. Die Merkmale der in den Fig. 1 bis 4 gezeigten Ausführungsformen sind untereinander variierbar und nicht auf eine definierte Ausführungsform beschränkt. So ist es beispielsweise denkbar, dass das in den Fig. 1 und 2 gezeigte Rohrstück 21 auch bei Rotorhohlwellen 2 gemäß der Ausführung der Fig. 3 bis 4 verwendet werden kann. Oder es ist beispielhaft denkbar, dass der Lagerungsbereich 12, wie in den Figuren 1 und 2 gezeigt, ebenfalls eine Öffnung 22, wie in den Fig. 3 bis 4 gezeigt aufweisen kann, wobei es auch denkbar ist, dass der Lagerungsbereich 14, wie in den Fig. 3 bis 4 gezeigt, geschlossen, das bedeutet ohne Öffnung 22 ausgestaltet ist.

### Bezugszeichenliste

- 1: Rotor
- 2: Rotorhohlwelle
- 3: Zylindermantel
- 3.1: Innenfläche des Zylindermantels
- 4: (erster) Stirnflansch
- 4.1: Wellenzapfen
- 5: (zweiter) Stirnflansch
- 5.1: Wellenzapfen
- 5.2: Aussparung
- 5.3: Verzahnung
- 6: Blechpaket
- 7: Einlass

- 10: Kühlmediumverteilelement
- 11: Aufnahmebereich
- 12: Ableitbereich
- 12.1: Mantelfläche
- 12.2: Stirnfläche
- 12.3: Fase
- 13: Abgabebereich
- 14: Lagerungsbereich
- 15: Austrittsöffnung
- 16: Struktur
- 17: Durchlassöffnung
- 18: Bohrung
- 19: Einlasskanal
- 20: Einlasskanal
- 21: Rohrstück
- 22: Öffnung

- H: Wellenhohlraum
- K: Kühlmedium
- L: Längsachse
- R: Hohlraum
- S: Symmetrieachse

## Patentansprüche

1. Gebaute Rotorhohlwelle (2) für einen sich um eine Längsachse (L) rotierenden Rotor (1) einer elektrischen Maschine, aufweisend einen Zylindermantel (3), welcher einen Wellenhohlraum (H) umgibt, sowie beidseitig an dem Zylindermantel (3) angeordnete Stirnflansche (4, 5), wobei sich an den Stirnflanschen (4,5) jeweils ein Wellenzapfen (4.1, 5.1) befindet und wobei in einem der Stirnflansche (4), insbesondere in dessen Wellenzapfen (4.1) ein Einlass (7) vorgesehen ist, über welchen ein Kühlmedium (K) in den Wellenhohlraum (H) und an eine Innenfläche (3.1) des Zylindermantels (3) leitbar ist, wobei innerhalb des Wellenhohlraums (H) ein zur Längsachse (L) symmetrisch ausgebildetes Kühlmediumverteilelement (10) angeordnet ist, welches das über den Einlass (7) eintretende Kühlmedium (K) über einen Aufnahmebereich (11) aufnimmt, über einen Ableitbereich (12) in Richtung der Innenfläche (3.1) des Zylindermantels (3) führt und über einen Abgabebereich (13) auf die Innenfläche (3.1) abgibt, wobei der Abgabebereich (13) in der Mitte der axialen Ausdehnung des Ableitbereiches (12) ausgebildet ist, **dadurch gekennzeichnet, dass** das Kühlmediumverteilelement (10) eine sphäroidische Gestalt aufweist.

2. Gebaute Rotorhohlwelle (2) nach Anspruch 1,
**dadurch gekennzeichnet, dass** das Kühlmediumverteilelement (10) den Wellenhohlraum (H) symmetrisch aufteilt.

3. Gebaute Rotorhohlwelle (2) nach einem der vorangegangenen Ansprüche,
**dadurch gekennzeichnet, dass**
das Kühlmediumverteilelement (10) zumindest sich ausgehend von einem der Stirnflansche (4) bis zu dem anderen der Stirnflansche (5) innerhalb des Wellenhohlraums (H) erstreckt.

4. Gebaute Rotorhohlwelle (2) nach einem der vorangegangenen Ansprüche,
**dadurch gekennzeichnet, dass**
das Kühlmediumverteilelement (10) einen Lagerungsbereich (14) aufweist, welcher zur Lagerung des Kühlmediumverteilelementes (10) an dem Stirnflansch (5) dient, welcher gegenüber dem Stirnflansch (4) angeordnet ist, der den Einlass (7) aufweist-.

5. Gebaute Rotorhohlwelle (2) nach einem der vorangegangenen Ansprüche,
**dadurch gekennzeichnet, dass**
der Abgabebereich (13) mindestens eine, insbesondere eine Mehrzahl an radialen Austrittsöffnungen (15) aufweist, welche über den Umfang des Kühlmediumverteilelementes (10) in gleichem Abstand zueinander ausgebildet sind.

6. Gebaute Rotorhohlwelle (2) nach einem der vorangegangenen Ansprüche
**dadurch gekennzeichnet, dass**
das Kühlmediumverteilelement (10) auf dessen Innenwandung wenigstens eine Struktur (16) zur Verteilung des Kühlmediums (K) über den gesamten Umfang des Kühlmediumverteilelementes (10) aufweist.

7. Gebaute Rotorhohlwelle (2) nach Anspruch 6,
**dadurch gekennzeichnet, dass**
die Struktur (16) konvex ausgebildet ist.

8. Gebaute Rotorhohlwelle (2) nach einem der vorangegangenen Ansprüche,
**dadurch gekennzeichnet, dass**
der Einlass (7) von mehreren auf dem Umfang des Wellenzapfens gleich verteilter Einlasskanäle (19, 30) gebildet ist, welche im Aufnahmebereich (11) des Kühlmediumverteilelementes (10) münden.

9. Gebaute Rotorhohlwelle (2) nach einem der vorherigen Ansprüche, **dadurch gekennzeichnet, dass**
der Zylindermantel (3) wenigstens eine Durchlassöffnung (17) aufweist, welche ein Durchfließen des Kühlmediums (K) bei sich drehender Rotorhohlwelle (2) in radialer Richtung sowie ein Benetzen eines den Rotor (1) umgebenden Stators ermöglicht.

10. Gebaute Rotorhohlwelle (2) nach Anspruch 9,
**dadurch gekennzeichnet, dass**
eine Mehrzahl an Durchlassöffnungen (17) über den Umfang des Zylindermantels (3) gleichverteilt ausgebildet sind.

11. Gebaute Rotorhohlwelle (2) nach einem der Ansprüche 9 oder 10,
**dadurch gekennzeichnet, dass**
Durchlassöffnungen (17), welche in einem Randbereich des Zylindermantels (3) ausgebildet sind gegenüber den Durchlassöffnungen (17), welche in einem anderen Randbereich des Zylindermantels (3) ausgebildet sind, über den Umfang versetzt zueinander angeordnet sind.

12. Rotor (1) aufweisend eine mit Blechpaketen bestückte gebaute Rotorhohlwelle (2) nach einem der vorherigen Ansprüche.

13. Elektrische Maschine, insbesondere Asynchronmotor oder permanent erregte Synchronmaschine, mit einem Rotor (1) nach Anspruch 12.

## Claims

1. An assembled hollow rotor shaft (2) for a rotor (1), which rotates about a longitudinal axis (L), of an electric machine, comprising a cylinder jacket (3) which surrounds a shaft cavity (H), and end flanges (4, 5) arranged on both sides on the cylinder jacket (3), wherein a shaft journal (4.1, 5.1) is located on each of the end flanges (4,5), and wherein an inlet (7) is provided in one of the end flanges (4), in particular in the shaft journal (4.1) thereof, via which a cooling medium (K) can be conducted into the shaft cavity (H) and onto an inner surface (3.1) of the cylinder jacket (3), whereas a cooling-medium distribution element (10) is arranged within the shaft cavity (H), said cooling-medium distribution element (10) being formed symmetrically perpendicularly to the longitudinal axis (L) and receiving the cooling medium (K), which enters via the inlet (7), via a receiving region (11), guiding said cooling medium via a removal region (12) in the direction of the inner surface (3.1) of the cylinder jacket (3) and discharging said cooling medium onto the inner surface (3.1) via a discharging region (13), whereas the discharging region (13) is formed in the center of the axial extent of the removal region (12), **characterized in that** the cooling-medium distribution element (10) has a spheroidal design.

2. The assembled hollow rotor shaft (2) as claimed in claim 1,
**characterized in that**
the cooling-medium distribution element (10) symmetrically divides the shaft cavity (H).

3. The assembled hollow rotor shaft (2) as claimed in one of the preceding claims,
**characterized in that**
the cooling-medium distribution element (10) extends within the shaft cavity (H) at least from one of the end flanges (4) to the other of the end flanges (5).

4. The assembled hollow rotor shaft (2) as claimed in one of the preceding claims,
**characterized in that**
the cooling-medium distribution element (10) comprises a mounting region (14) which serves for mounting the cooling-medium distribution element (10) on the end flange (5) which is arranged opposite the end flange (4) which has the inlet (7).

5. The assembled hollow rotor shaft (2) as claimed in one of the preceding claims,
**characterized in that**
the discharging region (13) comprises at least one radial outlet opening (15), in particular a plurality of radial outlet openings (15) which are formed at an equal distance from one another over the extent of the cooling-medium distribution element (10).

6. The assembled hollow rotor shaft (2) as claimed in one of the preceding claims,
**characterized in that**
the cooling-medium distribution element (10) comprises at least one structure (16) on its inner wall for distributing the cooling medium (K) over the entire extent of the cooling-medium distribution element (10).

7. The assembled hollow rotor shaft (2) as claimed in claim 6,
**characterized in that**
the structure (16) is of convex design.

8. The assembled hollow rotor shaft (2) as claimed in one of the preceding claims,
**characterized in that**
the inlet (7) is formed by a plurality of inlet channels (19, 30) which are equally distributed on the circumference of the shaft journal and open in the receiving region (11) of the cooling-medium distribution element (10).

9. The assembled hollow rotor shaft (2) as claimed in one of the preceding claims,
**characterized in that**
the cylinder jacket (3) comprises at least one passage opening (17) which permits the cooling medium (K) to flow through in the radial direction as the hollow rotor shaft (2) is rotating, and permits wetting of a stator surrounding the rotor (1).

10. The assembled hollow rotor shaft (2) as claimed in claim 9,
**characterized in that**
a plurality of passage openings (17) are formed in a manner equally distributed over the circumference of the cylinder jacket (3).

11. The assembled hollow rotor shaft (2) as claimed in either of claims 9 and 10,
**characterized in that**
passage openings (17) which are formed in an edge region of the cylinder jacket (3) are arranged offset with respect to one another over the circumference in relation to the passage openings (17) which are formed in another edge region of the cylinder jacket (3).

12. A rotor (1) comprising a assembled hollow rotor shaft (2), which is equipped with lamination assemblies, as claimed in one of the preceding claims.

13. An electric machine, in particular asynchronous motor or permanently excited synchronous machine, comprising a rotor (1) as claimed in claim 12.

## Revendications

1. Arbre creux de rotor assemblé (2) pour un rotor (1) d'une machine électrique tournant autour d'un axe longitudinal (L), présentant une enveloppe cylindrique (3) qui entoure une cavité d'arbre (H), ainsi que des brides frontales (4, 5) agencées des deux côtés sur l'enveloppe cylindrique (3), un tourillon d'arbre (4.1, 5.1) se trouvant respectivement sur les brides frontales (4, 5), et une entrée (7) étant prévue dans une des brides frontales (4), notamment dans son tourillon d'arbre (4.1), par laquelle un fluide de refroidissement (K) peut être conduit dans la cavité d'arbre (H) et sur une surface intérieure (3.1) de l'enveloppe cylindrique (3), un élément de distribution de fluide de refroidissement (10) configuré symétriquement par rapport à l'axe longitudinal (L) étant agencé à l'intérieur de la cavité d'arbre (H), qui reçoit le fluide de refroidissement (K) entrant par l'entrée (7) par l'intermédiaire d'une zone de réception (11), le guide par l'intermédiaire d'une zone de dérivation (12) en direction de la surface intérieure (3.1) de l'enveloppe cylindrique (3) et le décharge par l'intermédiaire d'une zone de déchargement (13) sur la surface intérieure (3.1), la zone de déchargement (13) étant formée au milieu de l'extension axiale de la zone de dérivation (12),
**caractérisé en ce que** l'élément de distribution de fluide de refroidissement (10) présente une forme sphéroïdale.

2. Arbre creux de rotor assemblé (2) selon la revendication 1, **caractérisé en ce que** l'élément de distribution de fluide de refroidissement (10) divise symétriquement la cavité d'arbre (H).

3. Arbre creux de rotor assemblé (2) selon l'une quelconque des revendications précédentes, **caractérisé en ce que** l'élément de distribution de fluide de refroidissement (10) s'étend au moins depuis l'une des brides frontales (4) jusqu'à l'autre des brides frontales (5) à l'intérieur de la cavité d'arbre (H).

4. Arbre creux de rotor (2) assemblé selon l'une quelconque des revendications précédentes, **caractérisé en ce que** l'élément de distribution de fluide de refroidissement (10) présente une zone de support (14) qui sert à supporter l'élément de distribution de fluide de refroidissement (10) sur la bride frontale (5), qui est agencée en face de la bride frontale (4) qui présente l'entrée (7).

5. Arbre creux de rotor assemblé (2) selon l'une quelconque des revendications précédentes, **caractérisé en ce que** la zone de déchargement (13) présente au moins une, notamment une pluralité d'ouvertures de sortie radiales (15), qui sont formées sur la circonférence de l'élément de distribution de fluide de refroidissement (10) à une distance égale les unes des autres.

6. Arbre creux de rotor assemblé (2) selon l'une quelconque des revendications précédentes, **caractérisé en ce que** l'élément de distribution de fluide de refroidissement (10) présente sur sa paroi intérieure au moins une structure (16) pour la distribution du fluide de refroidissement (K) sur toute la circonférence de l'élément de distribution de fluide de refroidissement (10).

7. Arbre creux de rotor assemblé (2) selon la revendication 6, **caractérisé en ce que** la structure (16) est configurée sous forme convexe.

8. Arbre creux de rotor assemblé (2) selon l'une quelconque des revendications précédentes, **caractérisé en ce que** l'entrée (7) est formée par plusieurs canaux d'entrée (19, 30) répartis de manière uniforme sur la circonférence du tourillon d'arbre, qui débouchent dans la zone de réception (11) de l'élément de distribution de fluide de refroidissement (10).

9. Arbre creux de rotor assemblé (2) selon l'une quelconque des revendications précédentes, **caractérisé en ce que** l'enveloppe cylindrique (3) présente au moins une ouverture de passage (17), qui permet un écoulement du fluide de refroidissement (K) dans la direction radiale lorsque l'arbre creux du rotor (2) tourne, ainsi qu'un mouillage d'un stator entourant le rotor (1) .

10. Arbre creux de rotor assemblé (2) selon la revendication 9, **caractérisé en ce qu'**une pluralité d'ouvertures de passage (17) sont formées de manière répartie uniformément sur la circonférence de l'enveloppe cylindrique (3).

11. Arbre creux de rotor assemblé (2) selon l'une quelconque des revendications 9 ou 10, **caractérisé en ce que** les ouvertures de passage (17) qui sont formées dans une zone de bord de l'enveloppe cylindrique (3) sont agencées de manière décalée les unes par rapport aux autres sur la circonférence par rapport aux ouvertures de passage (17) qui sont formées dans une autre zone de bord de l'enveloppe cylindrique (3).

12. Rotor (1) présentant un arbre creux de rotor assemblé (2) équipé de paquets de tôles selon l'une quelconque des revendications précédentes.

13. Machine électrique, notamment moteur asynchrone ou machine synchrone à excitation permanente, comprenant un rotor (1) selon la revendication 12.
